# EUROPÄISCHE PATENTSCHRIFT

(11) **EP 4 224 046 B1**
(45) Veröffentlichungstag und Bekanntmachung des Hinweises auf die Patenterteilung: **16.07.2025**
(21) Anmeldenummer: 23152139.4
(22) Anmeldetag: 18.01.2023
(51) Int. Cl.: F16K 11/14, F16K 11/16, F16K 31/524

(54) **FLUIDUMSTELLVENTIL MIT DIFFERENZDRUCKBEAUFSCHLAGBAREN VENTILSCHLIESSKÖRPERN**
FLUID DIVERTER VALVE WITH VALVE CLOSING BODIES WHICH CAN BE SUBJECTED TO DIFFERENTIAL PRESSURE
SOUPAPE DE RÉGLAGE DE FLUIDE AVEC CORPS DE FERMETURE DE SOUPAPE POUVANT ÊTRE SOUMIS À UNE PRESSION DIFFÉRENTIELLE

(30) Priorität: 02.02.2022 DE 102022201110
(43) Veröffentlichungstag der Anmeldung: 09.08.2023
(73) Patentinhaber: Hansgrohe SE, 77761 Schiltach (DE)
(72) Erfinder: Melle, Fabian, 77770 Durbach (DE)
(74) Vertreter: Patentanwälte Ruff, Wilhelm, Beier, Dauster & Partner mbB

(56) Entgegenhaltungen:
- WO-A1-2021/037421
- WO-A1-2021/239051
- DE-A1- 10 046 977

## Beschreibung

Die Erfindung bezieht sich auf ein Fluidumstellventil mit einem Ventilgehäuse, einem Einlassbereich, der einen Einlass in das Ventilgehäuse umfasst, einem ersten und einem zweiten Auslass aus dem Ventilgehäuse, einer ersten Fluidverbindung vom Einlassbereich zum ersten Auslass, einer zweiten Fluidverbindung vom Einlassbereich zum zweiten Auslass, einer Gegendruckkammer, einer ersten Ventileinheit mit einem ersten Ventilschließkörper, einer zweiten Ventileinheit mit einem zweiten Ventilschließkörper und einem nutzerbetätigbaren Umstellkörper zur Umstellung der Ventilschließkörper zwischen ihrer Schließstellung und ihrer Offenstellung. Die Gegendruckkammer ist über einen Einlassverbindungskanal mit dem Einlassbereich fluidverbunden. Der erste Ventilschließkörper ist zwischen einer Schließstellung und einer Offenstellung für die erste Fluidverbindung beweglich und einerseits über den Einlassbereich und andererseits über die Gegendruckkammer fluiddruckbeaufschlagbar angeordnet. Der zweite Ventilschließkörper ist zwischen einer Schließstellung und einer Offenstellung für die zweite Fluidverbindung beweglich und einerseits über den Einlassbereich und andererseits über die Gegendruckkammer fluiddruckbeaufschlagbar angeordnet. Mit anderen Worten sind die Ventilschließkörper differenzdruckbeaufschlagbar, indem sie im Betrieb des Ventils jeweils vom Differenzdruck des Fluids im Einlassbereich einerseits und in der Gegendruckkammer andererseits beaufschlagt werden. Der Umstellkörper ist durch eine Umschaltbewegung zwischen verschiedenen Betriebspositionen umschaltbar.

Fluidumstellventile dieser Art dienen dazu, ein zugeführtes Fluid steuerbar entweder am ersten oder am zweiten Auslass bereitzustellen bzw. dort abzugeben. Bei dem Fluid kann es sich vorliegend allgemein um eine Flüssigkeit oder ein Gas bzw. Dampf handeln. Beispielsweise werden in der Sanitärtechnik solche Fluidumstellventile als sanitäre Fluidumstellventile dazu verwendet, das zugeführte Fluid, in diesem Fall typischerweise Wasser, wahlweise über den ersten Auslass einer ersten Verbraucherstelle, z.B. einem Badewannenauslauf, oder über den zweiten Auslass einer zweiten Verbraucherstelle, z.B. einer Badewannen-Handbrause, zuzuführen. Des Weiteren werden derartige sanitäre Fluidumstellventile in Dusch- oder Küchenbrausen, die für mehrere Brausestrahlarten ausgelegt sind, dazu benutzt, das Brausefluid, wiederum typischerweise Wasser, wahlweise einer Fluidführung für eine erste Brausestrahlart oder einer Fluidführung für eine zweite Brausestrahlart zuzuführen. Falls zusätzlich eine Absperrfunktion gefordert ist, kann dem Fluidumstellventil eine entsprechende Absperrventilvorrichtung zugeordnet sein, z.B. stromaufwärts des Einlasses oder stromabwärts des ersten und/oder des zweiten Auslasses oder integriert in das Ventilgehäuse des Fluidumstellventils.

Bei herkömmlichen sanitären Fluidumstellventilen sind die Umstellkräfte oftmals stark vom Fluiddruck abhängig, der auf die maßgeblichen Umstellkomponenten des Ventils wirkt, insbesondere auf die Ventilschließkörper, wodurch sich im Betrieb des Ventils die Haptik der Ventilumstellung bzw. die vom Benutzer aufzuwendende Umstellkraft je nach aktuellem Fluiddruck merklich ändert. Dem kann bei Fluidumstellventilen der eingangs genannten, gattungsgemäßen Art durch die Differenzdruckwirkung auf die Ventilschließkörper entgegengewirkt werden. Herkömmliche sanitäre Fluidumstellventile mit fluiddruckabhängigem Schaltverhalten benötigen zudem meist einen relativ großen axialen Bewegungshub für die Ventilschließkörper bzw. für einen auf sie wirkenden, nutzerbetätigten Umstellkörper von typisch mehr als 3mm.

Ein Fluidumstellventil der eingangs genannten Art ist in der Offenlegungsschrift WO 2021/037421 A1 als Einbauteil in einen Brausekopf für eine Sanitärarmatur offenbart. Das dortige Fluidumstellventil weist eine Mehrzahl von Membranventilen mit jeweils einer Membran und jeweils einer Gegendruckkammer auf, wobei die Gegendruckkammern strömungstechnisch parallel mit dem Einlassbereich verbunden sind. Die Membranventile werden vom Fluiddruck bzw. Staudruck in den Gegendruckkammern in ihrer Schließstellung gehalten und über eine Steuerung mit einem nutzerbetätigt drehbaren Pin gesteuert, der einen Steuerkanal in Form einer Axialnut aufweist, durch den die Gegendruckkammern unter Umgehung der Membranen mit dem jeweiligen Auslass verbindbar sind. Je nach Drehposition des Pins kann somit über den Steuerkanal eine Fluiddruckentlastung einer der Gegendruckkammern und damit einhergehend das Öffnen des zugehörigen Membranventils bewirkt werden, während die übrigen Membranventile geschlossen bleiben.

Ein weiteres herkömmliches Fluidumstellventil mit einer Mehrzahl von Auslässen und Ventilschließkörpern mit zugeordneten Gegendruckkammern ist in der Offenlegungsschrift EP 3 147 029 A2 offenbart, wobei dort die Fluidführung zu den Gegendrucckammern über einen vom Benutzer betätigbaren Elektromagneten gesteuert wird.

Weitere herkömmliche Fluidumstellventile zur wahlweisen Durchlassverbindung von einem Einlass zu einem jeweiligen von mehreren Auslässen sind in den Offenlegungsschriften DE 100 46 977 A1 und WO 2021/239051 A1 offenbart.

Der Erfindung liegt als technisches Problem die Bereitstellung eines Fluidumstellventils zugrunde, das gegenüber dem oben erwähnten Stand der Technik Vorteile insbesondere hinsichtlich Funktionsweise, Aufbau und/oder Betriebszuverlässigkeit bietet.

Die Erfindung löst dieses Problem durch die Bereitstellung eines Fluidumstellventils mit den Merkmalen des Anspruchs 1. Vorteilhafte Weiterbildungen der Erfindung sind in den Unteransprüchen angegeben.

Bei diesem Fluidumstellventil ist die Gegendruckkammer über einen ersten Auslassverbindungskanal mit dem ersten Auslass und über einen zweiten Auslassverbindungskanal mit dem zweiten Auslass fluidverbunden, und der nutzerbetätigbare Umstellkörper gibt in einer ersten Betriebsposition den ersten Ventilschließkörper frei und hält den zweiten Ventilschließkörper in seiner Schließstellung, während er in einer zweiten Betriebsposition den ersten Ventilschließkörper in seiner Schließstellung hält und den zweiten Ventilschließkörper freigibt.

Durch diesen speziellen Ventilaufbau ermöglicht dieses Fluidumstellventil gegenüber herkömmlichen Fluidumstellventilen Vorteile hinsichtlich Funktionsweise, Aufbau und/oder Betriebszuverlässigkeit. So lässt sich dieses Ventil schon mit nur einer Gegendruckkammer realisieren und damit bei Bedarf entsprechend kompakt bauen. Zudem lässt es sich problemlos dergestalt realisieren, dass die vom Benutzer aufzuwendende Betätigungskraft vergleichsweise gering gehalten werden kann und diese Betätigungskraft nicht oder jedenfalls kaum vom jeweils herrschenden Fluiddruck abhängt. Über den jeweiligen Auslassverbindungskanal kann bei der Betätigung des Umstellkörpers der in der Gegendruckkammer vorhandene Fluidruck rasch abgebaut werden. Beim erfindungsgemäßen Ventil ist es der Umstellkörper selbst, der die Ventilschließkörper in ihrer Schließstellung hält, so dass die Ventilschließkörper nicht oder jedenfalls nicht allein durch Fluiddruck in ihrer Schließstellung gehalten werden müssen, wobei je nach Ausführung der Fluiddruck zusätzlich dazu beitragen kann. Dies kommt einer vergleichsweise hohen Betriebszuverlässigkeit des Ventils zugute. Dazu wirkt der Umstellkörper vorzugsweise durch mechanischen Kontakt entsprechend auf den Ventilschließkörper ein, um diesen in seiner Schließstellung zu halten. Dieser mechanische Wirkkontakt kann direkt, d.h. durch Berührkontakt des Umstellkörpers mit dem Ventilschließkörper, oder indirekt über ein entsprechendes mechanisches Übertragungselement zwischen Umstellkörper und Ventilschließkörper realisiert sein. Dabei kann erfindungsgemäß mit dem Umstellkörper als einem einzigen, vorzugsweise einstückigen Bauteil sowohl auf den ersten als auch auf den zweiten Ventilschließkörper eingewirkt werden. Es sind hierfür folglich nicht mehrere Umstellkörper erforderlich.

Es versteht sich, dass das erfindungsgemäße Fluidumstellventil je nach Bedarf und Anwendungsfall genau zwei oder mehr als zwei Auslässe aus dem Ventilgehäuse und somit genau zwei oder mehr als zwei Fluidverbindungen und Ventileinheiten aufweisen kann und sich insbesondere als sanitäres Fluidumstellventil in der Sanitärtechnik eignet, jedoch auch auf anderen Gebieten nutzbringend verwendbar ist, in denen Bedarf an einem Fluidumstellventil mit derartigen Fluidführungseigenschaften besteht.

In einer Weiterbildung der Erfindung umfasst die Umschaltbewegung des Umstellkörpers eine Axialbewegung und eine Drehbewegung um die Achse seiner Axialbewegung. Dies stellt eine für die gewünschte Umschaltbewegung des Umstellkörpers vorteilhafte Realisierung dar. In einer funktionell und konstruktiv vorteilhaften Ausführung sind die Axialbewegung und die Drehbewegung zumindest zeitweise überlagert, z.B. als eine kombinierte axiale Anhebe- und Drehbewegung und/oder eine kombinierte axiale Absenk- und Drehbewegung, in alternativen Ausführungen erfolgen die Axialbewegung und die Drehbewegung zeitlich nacheinander. In anderweitigen alternativen Ausführungen ist die Umschaltbewegung des Umstellkörpers z.B. eine reine Drehbewegung.

In einer Weiterbildung der Erfindung ist der Umstellkörper durch eine Weiterschalteinrichtung zyklisch von einer zu einer nächsten der verschiedenen Betriebspositionen weiterschaltbar. Zyklisch weiterschaltend bedeutet, dass sich der Umstellkörper bei wiederholter Betätigung endlos immer in die gleiche Richtung bewegt und seine verschiedenen Betriebspositionen zyklisch nacheinander einnimmt. Dies stellt eine konstruktiv und funktionell vorteilhafte Realisierung für das Umschalten des Umstellkörpers zwischen seinen verschiedenen Betriebspositionen dar. In alternativen Ausführungen kann die Umschaltbewegung des Umstellkörpers zwischen den verschiedenen Betriebspositionen in anderer Weise erfolgen, z.B. jeweils direkt von einer momentanen Betriebsposition in eine beliebige gewünschte nächste Betriebsposition und/oder wahlweise in zwei entgegengesetzten Richtungen, z.B. im Uhrzeigersinn und im Gegenuhrzeigersinn.

In einer Weiterbildung der Erfindung sperrt der Umstellkörper in der ersten Betriebsposition den zweiten Auslassverbindungskanal und/oder in der zweiten Betriebsposition den ersten Auslassverbindungskanal ab. Dies stellt eine konstruktiv und funktionell vorteilhafte Verwendung des Umstellkörpers nicht nur zum Halten des jeweiligen Ventilschließkörpers in seiner Schließstellung, sondern auch zum Absperren des ersten bzw. des zweiten Auslassverbindungskanals dar. In alternativen Ausführungen sperrt ein separates Absperrelement anstelle des Umstellkörpers den ersten und/oder den zweiten Auslassverbindungskanal ab.

In einer Weiterbildung der Erfindung entsprechen die verschiedenen Betriebspositionen verschiedenen Drehwinkelstellungen des Umstellkörpers. Dies stellt eine für viele Anwendungen günstige Realisierung der verschiedenen Betriebspositionen dar. In alternativen Ausführungen entsprechen die verschiedenen Betriebspositionen z.B. verschiedenen Axialstellungen des Umstellkörpers.

In einer Weiterbildung der Erfindung ist die Gegendruckkammer einteilig ausgebildet. Die erste und die zweite Ventileinheit sind in diesem Fall über die einteilige, gemeinsame Gegendruckkammer fluiddruckbeaufschlagbar. Dies stellt eine für die gewünschte Funktion der Gegendruckkammer und der Ventileinheiten konstruktiv vorteilhafte Realisierung dar. In alternativen Ausführungen ist die Gegendruckkammer mehrteilig ausgebildet, so dass sie mehrere einzelne Kammern umfasst, die individuell der jeweiligen Ventileinheit zugeordnet sind.

In einer Ausgestaltung der Erfindung weist der Umstellkörper ein in der einteiligen Gegendruckkammer beweglich angeordnetes Umstellglied auf, das auf den ersten und auf den zweiten Ventilschließkörper wirkt. Dies stellt eine konstruktiv und funktionell vorteilhafte Realisierung für den Umstellkörper dar. In alternativen Ausführungen weist der Umstellkörper z.B. ein beweglich angeordnetes Umstellglied außerhalb der Gegendruckkammer oder mehrere Umstellglieder in der Gegendruckkammer auf, die je einem der Ventilschließkörper zugeordnet sind.

**In** einer weiteren Ausgestaltung der Erfindung beinhaltet das Umstellglied in der einteiligen Gegendruckkammer eine axial- und drehbewegliche Umstellscheibe, die in den verschiedenen Betriebspositionen unterschiedliche Drehstellungen einnimmt und axial auf die Ventilschließkörper wirkt. Dies stellt eine konstruktiv und funktionell vorteilhafte Realisierung für das Umstellglied dar. Dabei kann die axial- und drehbewegliche Umstellscheibe z.B. kreissektorförmig oder polygonförmig oder in einer anderen, an die Anordnung der Ventilschließkörper angepassten Form gestaltet sein. In alternativen Ausführungen kann das Umstellglied z.B. als rein axialbewegliches oder als kippbewegliches Umstellglied ausgebildet sein.

**In** einer Weiterbildung der Erfindung ist der erste Auslassverbindungskanal in den ersten Ventilschließkörper eingebracht, und/oder der zweite Auslassverbindungskanal ist in den zweiten Ventilschließkörper eingebracht. Dies stellt eine konstruktiv und funktionell vorteilhafte Realisierung für die Auslassverbindungskanäle und die Ventilschließkörper dar. **In** alternativen Ausführungen ist der jeweilige Auslassverbindungskanal außerhalb des Ventilschließkörpers, z.B. neben dem Ventilschließkörper, vorgesehen.

**In** einer Weiterbildung der Erfindung ist der erste und/oder der zweite Ventilschließkörper in einer Aufnahme axialbeweglich geführt oder von einer Haltemembran axialbeweglich gehalten. Dies stellt eine konstruktiv und funktionell vorteilhafte Realisierung für die Anordnung der Ventilschließkörper dar. Dabei ist die Axialbewegung des betreffenden Ventilschließkörpers in vorteilhaften Ausführungen parallel zur Axialbewegung des Umstellkörpers, in alternativen Ausführungen nicht-parallel dazu. In alternativen Ausführungen sind die Ventilschließkörper z.B. drehbeweglich angeordnet oder starr mit dem Umstellkörper bzw. dem Umstellglied verbunden.

In einer Weiterbildung der Erfindung ist der erste und/oder der zweite Ventilschließkörper in seiner Offenstellung axial durch einen Anschlag begrenzt. Der jeweilige Anschlag begrenzt somit in definierter Weise die axiale Öffnungsbewegung des betreffenden Ventilschließkörpers. Auch dies stellt eine konstruktiv und funktionell vorteilhafte Maßnahme für die Ventilschließkörper dar. In alternativen Ausführungen ist die Offenstellung des ersten und/oder des zweiten Ventilschließkörpers nicht anschlagdefiniert, sondern z.B. durch eine Endstellung einer den betreffenden Ventilschließkörper haltenden Halterung, wie einer Haltemembran, begrenzt.

In einer Weiterbildung der Erfindung ist der erste und/oder der zweite Ventilschließkörper in Richtung seiner Schließstellung federkraftbeaufschlagt und/oder gewichtskraftbeaufschlagt. Federkraftbeaufschlagt bedeutet hier, dass eine Federkraft, z.B. von einer Druckfeder oder Zugfeder oder einem anderen elastischen Element, direkt oder indirekt z.B. über den Umstellkörper auf den betreffenden Ventilschließkörper in Richtung seiner Schließstellung wirkt. Gewichtskraftbeaufschlagt bedeutet hier, dass die Gewichtskraft des betreffenden Ventilschließkörpers in Richtung seiner Schließstellung wirkt. Dies stellt eine konstruktiv und funktionell vorteilhafte Realisierung für die Ventilschließkörper bzw. Ventilschließeinheiten dar. In alternativen Ausführungen ist keine elastische Rückstellkraft für die Ventilschließkörper in Richtung ihrer Schließstellung vorgesehen, was für bestimmte Anwendungen, in denen eine solche Rückstellkraft in Schließrichtung keinen Nutzen bringt, funktionell oder im Hinblick auf geringen Realisierungsaufwand von Vorteil sein kann.

In einer Weiterbildung der Erfindung umfasst der Einlassbereich eine einteilige Einlasskammer, über welche die Ventilschließkörper fluiddruckbeaufschlagbar sind. In dieser Ausführung liegt im Betrieb einlasskammerseitig an den verschiedenen Ventilschließkörpern ein im Wesentlichen gleich großer Fluiddruck an. Dies stellt eine konstruktiv und funktionell vorteilhafte Realisierung für die Ventilschließkörper bzw. Ventilschließeinheiten und für den Einlassbereich dar. In alternativen Ausführungen kann der Einlassbereich z.B. für jeden Ventilschließkörper eine einzelne, zugehörige Einlasskammer umfassen.

In einer Weiterbildung der Erfindung ist der erste Ventilschließkörper und/oder der zweite Ventilschließkörper dem Einlassbereich mit einer einlassseitigen Druckkontaktfläche und der Gegendruckkammer mit einer gegendruckseitigen Druckkontaktfläche zugewandt, die kleiner als die einlassseitige Druckkontaktfläche ist. In dieser Ausführung ist bei angenommen identischem Fluiddruck im Einlassbereich und in der Gegendruckkammer die aus dem Fluiddruck im Einlassbereich resultierende Kraft auf den betreffenden Ventilschließkörper größer als die aus dem Fluiddruck in der Gegendruckkammer resultierende Kraft. Dies stellt eine konstruktiv und funktionell vorteilhafte Realisierung für die Ventilschließkörper bzw. Ventilschließeinheiten dar, bei welcher der Fluiddruck im Betrieb den betreffenden Ventilschließkörper in Richtung der Gegendruckkammer vorspannen kann. In alternativen Ausführungen weist der betreffende Ventilschließkörper eine gegenüber der einlassseitigen Druckkontaktfläche größere gegendruckseitige Druckkontaktfläche auf, was für entsprechende Anwendungen günstig sein kann.

Vorteilhafte Ausführungsformen der Erfindung sind in den Zeichnungen dargestellt. Diese und weitere Ausführungsformen der Erfindung werden nachfolgend näher erläutert. Dabei zeigen:
- Fig. 1: eine Draufsicht von oben auf ein Fluidumstellventil mit einem Einlass und drei Auslässen,
- Fig. 2: eine Schnittansicht längs einer Linie II-II von Fig. 1 mit dem Ventil in einem Betriebszustand mit geöffnetem erstem Auslass,
- Fig. 3: eine Schnittansicht längs einer Linie III-III von Fig. 1,
- Fig. 4: die Schnittansicht von Fig. 2 für eine Variante des Fluidumstellventils ohne Umstelldruckfeder mit geschlossenem erstem Auslass,
- Fig. 5: die Schnittansicht von Fig. 2 für eine Variante des Fluidumstellventils mit membrangehaltenen Ventilschließkörpern mit geschlossenem erstem Auslass und
- Fig. 6: eine Schnittansicht längs einer Linie VI-VI von Fig. 5.

Wie in den Figuren anhand einiger exemplarischer Ausführungen veranschaulicht, beinhaltet das erfindungsgemäße Fluidumstellventil ein Ventilgehäuse 1, einen Einlassbereich 2 mit einem Einlass 3 in das Ventilgehäuse 1, einen ersten Auslass 4 aus dem Ventilgehäuse 1, einen zweiten Auslass 5 aus dem Ventilgehäuse 1, eine Gegendrucckammer 7, eine erste Ventileinheit 8, eine zweite Ventileinheit 9 und einen nutzerbetätigbaren Umstellkörper 11.

In entsprechenden Ausführungen weist das Fluidumstellventil wie in den gezeigten Ausführungsbeispielen zusätzlich einen dritten Auslass 6 aus dem Ventilgehäuse 1 und entsprechend eine dritte Ventileinheit 10 auf. Alle drei Ventileinheiten 8, 9, 10 haben im gezeigten Fall einen identischen Aufbau. Dabei können die drei Auslässe 4, 5, 6, wie in den Ausführungsbeispielen gezeigt in eine gleiche Richtung aus dem Ventilgehäuse 1 ausmünden, z.B. wie gezeigt in eine dem Einlass 3 entgegengesetzte Richtung oder alternativ in eine andere Richtung, oder sie können alternativ in zwei oder drei unterschiedliche Richtungen ausmünden, z.B. zueinander um 90° am Ventilgehäuse 1 versetzt.

Eine erste Fluidverbindung 12 führt vom Einlassbereich 2 zum ersten Auslass 4. Eine zweite Fluidverbindung 13 führt vom Einlassbereich 2 zum zweiten Auslass 5. In den gezeigten Ausführungsbeispielen führt eine dritte Fluidverbindung 14 vom Einlassbereich 2 zum dritten Auslass 6.

Der Einlassbereich 2 ist über einen Einlassverbindungskanal 15 mit der Gegendrucckammer 7 fluidverbunden. Der Einlassverbindungskanal 15 ist in den gezeigten Beispielen permanent offen, so dass im Betrieb die Gegendruckkammer 7 bleibend in aktiver, d.h. ununterbrochener, Fluidverbindung mit dem Einlassbereich 2 steht.

Die erste Ventileinheit 8 weist einen ersten Ventilschließkörper 16 auf, der zwischen einer Schließstellung S und einer Offenstellung O für die erste Fluidverbindung 12 beweglich und einerseits über den Einlassbereich 2 und andererseits über die Gegendruckkammer 7 fluiddruckbeaufschlagbar angeordnet ist. Die zweite Ventileinheit 9 weist einen zweiten Ventilschließkörper 17 auf, der zwischen einer Schließstellung S und einer Offenstellung O für die zweite Fluidverbindung 13 beweglich und einerseits über den Einlassbereich 2 und andererseits über die Gegendruckkammer 7 fluiddruckbeaufschlagbar angeordnet ist. Analog weist die dritte Ventileinheit 10 einen dritten Ventilschließkörper 18 auf, der zwischen einer Schließstellung und einer Offenstellung für die dritte Fluidverbindung 14 beweglich und einerseits über den Einlassbereich 2 und andererseits über die Gegendruckkammer 7 fluiddruckbeaufschlagbar angeordnet ist.

Die Ventilschließkörper 16, 17, 18 sind vorzugsweise baugleich ausgeführt, z.B. wie in den gezeigten Beispielen als zylinder- bzw. rohrförmige Bauteile, die als Ventilkolben fungieren. Dabei sind die Ventilschließkörper 16, 17, 18 vorzugsweise aus einem starren, nicht-elastischen Kunststoff- oder Metallmaterial gebildet.

Der nutzerbetätigbare Umstellkörper 11 dient zur Umstellung jeder der Ventilschließkörper 16, 17, 18 zwischen ihrer Schließstellung S und ihrer Offenstellung O, wobei der Umstellkörper 11 durch eine Umschaltbewegung zwischen verschiedenen Betriebspositionen umschaltbar ist. **In** den gezeigten Ausführungsbeispielen ist der Umstellkörper 11 zwischen drei verschiedenen Betriebspositionen umschaltbar, wobei je nach Betriebsposition stets nur einer der drei Ventilschließkörper 16, 17, 18 in seiner Offenstellung O ist, während die beiden anderen ihre Schließstellung S einnehmen.

Die Gegendruckkammer 7 ist über einen ersten Auslassverbindungskanal 19 mit dem ersten Auslass 4, über einen zweiten Auslassverbindungskanal 20 mit dem zweiten Auslass 5 und über einen in den Figuren nicht zu erkennenden, dritten Auslassverbindungskanal mit dem dritten Auslass 6 fluidverbunden.

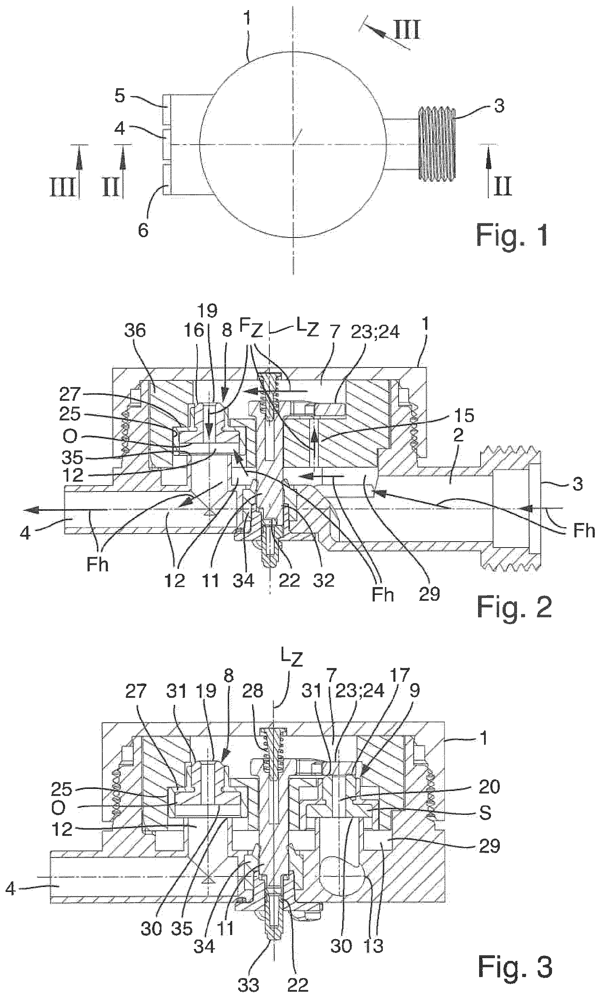

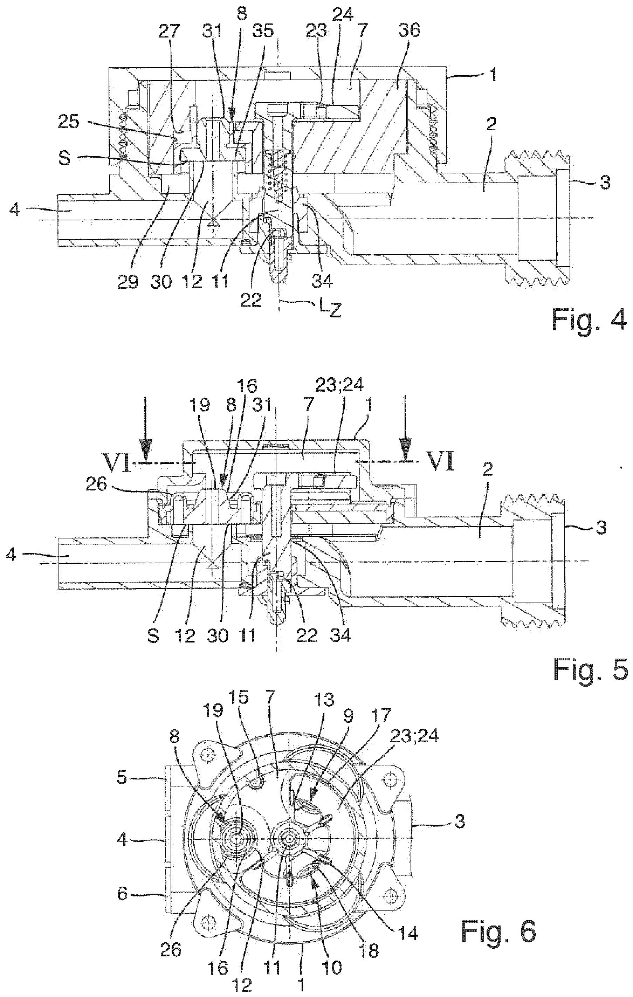

Der Umstellkörper 11 gibt in einer ersten Betriebsposition den ersten Ventilschließkörper 16 frei, wie in den Fig. 2 bis 6 ersichtlich, und hält den zweiten Ventilschließkörper 17 in seiner Schließstellung S, wie in den Fig. 3 und 6 ersichtlich. **In** den gezeigten Ausführungen hält der Umstellkörper 11 in seiner ersten Betriebsposition zusätzlich den dritten Ventilschließkörper 18 in seiner Schließstellung S, wie in Fig. 6 ersichtlich. **In** der ersten Betriebsposition ist folglich nur der erste Ventilschließkörper 16 in seiner Offenstellung O und somit nur die erste Fluidverbindung 12 geöffnet.

**In** einer zweiten Betriebsposition gibt der Umstellkörper 11 den zweiten Ventilschließkörper 17 frei und hält den ersten Ventilschließkörper 16 in seiner Schließstellung S. In den gezeigten Beispielen hält der Umstellkörper 11 in einer zweiten Betriebsposition auch den dritten Ventilschließkörper 18 in seiner Schließstellung S.

Bei den gezeigten Ausführungsbeispielen gibt der Umstellkörper 11 in seiner dritten Betriebsposition den dritten Ventilschließkörper 18 frei und hält den ersten und den zweiten Ventilschließkörper 16, 17 in ihrer Schließstellung S.

In den gezeigten Beispielen sind die Ventilschließkörper 16, 17, 18 zylindrisch bzw. kolben-/rohrförmig ausgebildet. In alternativen Ausführungen weisen die Ventilschließkörper eine andere Form auf, z.B. eine Scheibenform.

In vorteilhaften Ausführungsformen umfasst wie bei den gezeigten Beispielen die Umschaltbewegung des Umstellkörpers 11 eine Axialbewegung und eine Drehbewegung. Die Axialbewegung erfolgt z.B. wie in den gezeigten Realisierungen parallel zu einer Längsachse L_{Z} des Umstellkörpers 11 in beide entgegengesetzte Richtungen als entsprechende Anhebe- und Absenkbewegung. Die Drehbewegung des Umstellkörpers 11 erfolgt um eine Drehachse, die in den gezeigten Realisierungen durch die Längsachse L_{Z} des Umstellkörpers 11 gegeben ist. Alternativ ist die Drehachse parallel zur Längsachse L_{Z} des Umstellkörpers 11 versetzt oder zu dieser nicht-parallel orientiert. In den gezeigten Ausführungen entsprechen die erste, die zweite und die dritte Betriebsposition je einer Drehstellung des Umstellkörpers 11, wobei die verschiedenen Drehstellungen des Umstellkörpers 11 um jeweils 120° versetzt sind.

In einer konstruktiv vorteilhaften Ausführung ist wie in den gezeigten Beispielen der Umstellkörper 11 durch eine Weiterschalteinrichtung 22 zyklisch von einer zu einer nächsten der verschiedenen Betriebspositionen weiterschaltbar. Mit Hilfe der Weiterschalteinrichtung 22 erfolgt in den gezeigten Ausführungsbeispielen die Drehbewegung des Umstellkörpers 11 im Sinn einer zyklischen Weiterschaltung in nur eine Richtung, z.B. im Gegenuhrzeigersinn oder Uhrzeigersinn.

In den gezeigten Ausführungsbeispielen weist der Umstellkörper 11 dazu einen Druckstift 32 auf, der entlang der Längsachse L_{Z} des Umstellkörpers 11, alternativ parallel zu dieser versetzt oder nicht-parallel zu dieser, von der Gegendruckkammer 7 durch den Einlassbereich 2 hindurch aus dem Ventilgehäuse 1 heraus verläuft und entlang seiner Erstreckungsrichtung, d.h. seiner Längsachse, axialbeweglich sowie zusätzlich um seine Längsachse drehbeweglich am Ventilgehäuse 1 gelagert ist. Eine den Druckstift 32 hülsenförmig umgebende Stiftdurchführungsdichtung 34 dichtet den Einlassbereich 2 in seinem Stiftdurchführungsbereich nach außen bzw. gegenüber dem Ventilgehäuse 1 ab und lässt die axiale Anhebe- und Absenkbewegung des Druckstifts 32 und damit des Umstellkörpers 11 zu. Der Druckstift 32 schließt außen mit einer Drückbetätigungseinheit 33 ab, die mit der Weiterschalteinrichtung 22 zusammenwirkt. Die Weiterschalteinrichtung 22 kann von einer beliebigen, hierfür geeigneten herkömmlichen Art sein, was daher hier keiner näheren Erläuterungen bedarf, beispielsweise eine Weiterschalteinrichtung nach Art eines Kugelschreiber-Schaltprinzips, wie sie dem Fachmann an sich auch für derartige Schaltzwecke von sanitären Fluidumstellventilen bekannt ist. Die Schaltmechanik der Weiterschalteinrichtung 22 kann z.B. in herkömmlicher Weise dergestalt realisiert sein, dass sich der Umstellkörper 11, wenn der Benutzer die Drückbetätigungseinheit 33 axial drückend betätigt, zunächst von den Ventilschließkörpern 16, 17, 18 abhebt und anschließend durch das Zusammenwirken von Kulissenbahnen bzw. Schrägflächen in Richtung auf die nächste mögliche Position bewegt, was in den gezeigten Ausführungsformen einer Drehbewegung von 120° entspricht, um sich während oder nach der Drehbewegung wieder axial auf die Ventilschließkörper 16, 17, 18 abzusenken.

Alternativ ist eine herkömmliche Umschaltvorrichtung anderen Typs mit gleicher Umschaltfunktion verwendet, z.B. eines Typs mit drehbeweglichem Bedienelement statt dem erläuterten axialbeweglichen Bedienelement mit dem Druckstift 32 und der Drückbetätigungseinheit 33.

In einer vorteilhaften Realisierung sperrt der Umstellkörper 11 in der ersten Betriebsposition den zweiten Auslassverbindungskanal 20 ab. Bei den gezeigten Beispielen sperrt der Umstellkörper 11 in dieser Betriebsposition zudem den dritten Auslassverbindungskanal ab. Der erste Auslassverbindungskanal 19 bleibt geöffnet.

In einer vorteilhaften Realisierung sperrt der Umstellkörper 11 in der zweiten Betriebsposition den ersten Auslassverbindungskanal 19 ab, bei den gezeigten Beispielen zudem den dritten Auslassverbindungskanal. Der zweite Auslassverbindungskanal 19 bleibt geöffnet.

In den gezeigten Ausführungsbeispielen ist, wie bereits angegeben, der Umstellkörper 11 in die dritte Betriebsposition umschaltbar. **In** dieser sperrt er den ersten und den zweiten Auslassverbindungskanal 19, 20 ab, während der dritte Auslassverbindungskanal offen bleibt.

In vorteilhaften Ausführungsformen entsprechen wie bei den gezeigten Beispielen die verschiedenen Betriebspositionen verschiedenen Drehwinkelstellungen des Umstellkörpers 11. Dabei können, wie bei den gezeigten Beispielen, die Ventilschließkörper 16, 17, 18 auf einem Kreis um die Drehachse bzw. die Längsachse L_{Z} des Umstellkörpers 11 gleichmäßig verteilt, d.h. in Umfangsrichtung gleichmäßig gegeneinander versetzt, angeordnet sein, wie dies in Fig. 6 zu sehen ist. Dies stellt eine günstige konstruktive Voraussetzung dafür dar, dass der Umstellkörper 11, wie angegeben, je nach Drehwinkelstellung auf mindestens einen der Ventilschließkörper wirken und den oder die übrigen Ventilschließkörper freigeben kann. Zudem begünstigt diese Anordnung eine kompakte Bauform für das wie gezeigt z.B. zylindrische Ventilgehäuse 1. Vorzugsweise sind die Ventilschließkörper 16, 17, 18 hierbei auf einer gleichen axialen Höhe im Ventilgehäuse 1 angeordnet.

In vorteilhaften Ausführungen ist die Gegendruckkammer 7 wie bei den gezeigten Ausführungsbeispielen einteilig ausgebildet, d.h. sie bildet einen einzigen zusammenhängenden Kammerraum. In alternativen Ausführungen kann die Gegendruckkammer 7 aus mehreren einzelnen Kammern mit jeweils eigenem Kammerraum bestehen.

In einer konstruktiv vorteilhaften Ausführung weist wie in den gezeigten Beispielen der Umstellkörper 11 ein in der einteiligen Gegendruckkammer 7 beweglich angeordnetes Umstellglied 23 auf. In den gezeigten Ausführungsbeispielen wirkt das Umstellglied 23 je nach Betriebsposition auf zwei verschiedene der drei Ventilschließkörper 16, 17, 18 und gibt den übrigen Ventilschließkörper frei und ist starr mit dem Druckstift 32 verbunden. Durch ihre einteilige Gestaltung bietet die Gegendruckkammer 7 ausreichend Raum für die Unterbringung und Bewegung des Umstellglieds 23, ohne dass letzteres in seiner Größe unerwünscht stark beschränkt werden muss.

In einer vorteilhaften Realisierung beinhaltet das Umstellglied 11, wie in den gezeigten Beispielen, eine in der einteiligen Gegendruckkammer 7 axial- und drehbewegliche Umstellscheibe 24, die in den verschiedenen Betriebspositionen des Umstellkörpers 11 unterschiedliche Drehstellungen einnimmt und axial auf die Ventilschließkörper 16, 17, 18 wirkt. In den gezeigten Beispielen weist die Umstellscheibe 24 die Form eines Kreissektors mit einer Winkelausdehnung von ca. 240° auf, wie aus Fig. 6 ersichtlich, und ist starr mit dem Druckstift 32 verbunden, der sich senkrecht zur Scheibenebene der Umstellscheibe 24 erstreckt.

In vorteilhaften Ausführungsformen ist wie bei den gezeigten Beispielen der erste Auslassverbindungskanal 19 in den ersten Ventilschließkörper 16 und der zweite Auslassverbindungskanal 20 in den zweiten Ventilschließkörper 17 eingebracht. Zusätzlich ist bei den gezeigten Beispielen der dritte Auslassverbindungskanal in den dritten Ventilschließkörper 18 eingebracht. Speziell ist in den gezeigten Beispielen der jeweilige Auslassverbindungskanal 19, 20 als zentrische Längsbohrung in den kolbenförmigen Ventilschließkörper 16, 17, 18 eingebracht. Dies ermöglicht in einfacher Art und Weise, dass der Umstellkörper 11 nicht nur auf den jeweiligen Ventilschließkörper 16, 17, 18 wirken kann, um diesen in seiner Schließstellung S zu halten, sondern auch dessen Auslassverbindungskanal 19, 20 absperren bzw. abdichten kann.

In einer konstruktiv vorteilhaften Ausführung ist der erste und/oder der zweite Ventilschließkörper 16, 17 in einer jeweiligen Aufnahme 25 axialbeweglich geführt. **In** den gezeigten Beispielen der Fig. 1 bis 4 sind beide Ventilschließkörper 16, 17 und zusätzlich der dritte Ventilschließkörper 18 in je einer zugehörigen Aufnahme 25 axialbeweglich geführt. Dies kann z.B. wie gezeigt dadurch realisiert sein, dass das Ventilgehäuse 1 einen Gehäusekörper 36 aufweist, der den Einlassbereich 2 und die Gegendruckkammer 7 voneinander trennt und in dem die jeweiligen Aufnahmen 25 ausgebildet sind. **In** diesen Gehäusekörper 36 ist auch der Einlassverbindungskanal 15 als eine Durchführungsbohrung eingebracht, über die der Einlassbereich 2 mit der Gegendruckkammer 7 fluidverbunden ist, wie aus Fig. 2 ersichtlich. Die Aufnahmen 25 besitzen eine jeweils dem aufgenommenen Ventilschließkörper 16, 17, 18 entsprechende Form, d.h. in den gezeigten Ausführungsbeispielen mit den kolbenförmigen Ventilschließkörpern 16, 17, 18 sind die Aufnahmen 25 zylindrisch bzw. als Sacklochbohrungen ausgebildet.

In einer alternativen vorteilhaften Realisierung ist der erste und/oder zweite Ventilschließkörper 16, 17 von einer Haltemembran 26 axialbeweglich gehalten. Beim gezeigten Beispiel der Fig. 5 und 6 sind beide Ventilschließkörper 16, 17 und zusätzlich der dritte Ventilschließkörper 18 von je einer Haltemembran 26 axialbeweglich gehalten. Vorzugsweise kann der jeweilige Ventilschließkörper 16, 17, 18 zusammen mit seiner Haltemembran 26 als ein Zweikomponenten-Bauteil gefertigt sein, bei dem der starre, nichtelastische Ventilschließkörper 16, 17, 18 integriert mit der flexiblen Haltemembran 26 gefertigt bzw. verbunden ist.

In den erwähnten Realisierungen, in denen die Ventilschließkörper 16, 17, 18 axialbeweglich angeordnet sind, kann deren Axialbewegung parallel zu der Axialbewegung des Umstellkörpers 11 sein, wie in den gezeigten Beispielen. In alternativen Ausführungen ist vorgesehen, dass sich die Ventilschließkörper 16, 17, 18 axial nicht-parallel zum Umstellkörper 11 bewegen.

In vorteilhaften Ausführungen ist zumindest einer der Ventilschließkörper 16, 17, 18 in seiner Offenstellung O axial durch einen zugehörigen Anschlag 27 begrenzt, wobei die Anschlagbegrenzung bevorzugt dergestalt erfolgt, dass sich relativ kleine axiale Umstellhubwege des Umstellkörpers 11 realisieren lassen. In den Bauformen der gezeigten Beispiele der Fig. 2 bis 4 kann dadurch bei Bedarf vorgesehen werden, dass der Axialhub der Ventilschließkörper 16, 17, 18 von ihrer Schließstellung S in ihre Offenstellung O geeignet geringer gehalten wird als der axiale Umstellweg bzw. Hubweg des Umstellkörpers 11. Beispielsweise kann ermöglicht werden, dass der Axialhub der Ventilschließkörper 16, 17, 18 nur etwa 1,8mm bis 2,2mm beträgt und der axiale Umstell- bzw. Hubweg des Umstellkörpers 11 nur etwa 2mm bis 4mm beträgt.

In vorteilhaften Ausführungsformen ist wie bei den gezeigten Beispielen der erste und/oder der zweite Ventilschließkörper 16, 17 in Richtung seiner Schließstellung S federkraftbeaufschlagt. Speziell sind bei den gezeigten Beispielen der Fig. 1 bis 3 der erste und der zweite sowie zusätzlich der dritte Ventilschließkörper 18 in Richtung ihrer Schließstellung S federkraftbeaufschlagt. Für die Federkraftbeaufschlagung weist das Fluidumstellventil in dieser gezeigten Ausführung im Ventilgehäuse 1 eine Umstellfeder 28 auf, z.B. wie gezeigt in Form einer in der Gegendruckkammer 7 angeordneten Schraubendruckfeder, alternativ in Form einer Zugfeder oder eines anderen herkömmlichen elastischen Elements. Dadurch wird jeder Ventilschließkörper, auf den der Umstellkörper 11 in seiner momentanen Betriebsposition wirkt, unabhängig vom herrschenden Fluiddruck bzw. Differenzdruck und von der räumlichen Lageorientierung des Ventilgehäuses 1 in seine Schließstellung S elastisch vorgespannt. In den gezeigten Beispielen wirkt bei entsprechender Lageorientierung des Ventilgehäuses 1, wie bei horizontaler Orientierung mit in den Fig. 2 bis 5 nach oben weisender Vertikalrichtung, auf die Ventilschließkörper 16, 17, 18 alternativ oder zusätzlich zu der erwähnten Federkraft die Gewichtskraft der Ventilschließkörper 16, 17, 18 in Richtung ihrer Schließstellung S, d.h. die Ventilschließkörper 16, 17, 18 sind in diesem Fall in Richtung ihrer Schließstellung S gewichtskraftbeaufschlagt.

In einer konstruktiv vorteilhaften Ausführung umfasst wie in den gezeigten Beispielen der Einlassbereich 2 eine einteilige Einlasskammer 29, d.h. die Einlasskammer 29 bildet einen einzigen zusammenhängenden Einlasskammerraum. Die Ventilschließkörper 16, 17, 18 sind über diese einteilige Einlasskammer 29 gemeinsam fluiddruckbeaufschlagbar. In den gezeigten Ausführungsbeispielen liegt die Einlasskammer 29 in Bezug auf die Ventilschließkörper 16, 17, 18 der Gegendruckkammer 7 gegenüber.

In einer vorteilhaften Realisierung ist der erste und/oder der zweite Ventilschließkörper 16, 17 dem Einlassbereich 2 mit einer einlassseitigen Druckkontaktfläche 30 und der Gegendruckkammer 7 mit einer gegendruckseitigen Druckkontaktfläche 31 zugewandt. Speziell sind bei den gezeigten Beispielen der erste und der zweite sowie zusätzlich der dritte Ventilschließkörper 18 dem Einlassbereich 2 mit je einer einlassseitigen Drucckontaktfläche 30 und der Gegendruckkammer 7 mit je einer gegendruckseitigen Drucckontaktfläche 31 zugewandt. Dabei sind die gegendruckseitige Druckkontaktfläche 31 und die einlassseitige Druckkontaktfläche 30 ringförmig ausgebildet, wobei die gegendruckseitige Druckkontaktfläche 31 kleiner als die einlassseitige Druckkontaktfläche 30 ist. Als Folge davon ist bei gleich großen Fluiddrücken in dem Einlassbereich 2 einerseits und in der Gegendruckkammer 7 andererseits die aus dem Fluiddruck in dem Einlassbereich 2 resultierende Druckkraft auf den jeweiligen Ventilschließkörper 16, 17, 18 größer als die dazu entgegengesetzt wirkende Druckkraft, die aus dem Fluiddruck in der Gegendruckkammer 7 auf den jeweiligen Ventilschließkörper 16, 17, 18 resultiert. Dadurch werden bei konstantem anliegendem Fluiddruck im Ventilgehäuse 1 die Ventilschließkörper 16, 17, 18 im Betrieb in Richtung ihrer Offenstellung O gedrückt, d.h. der Fluiddruck spannt die Ventilschließkörper 16, 17, 18 in ihre Offenstellung O vor.

Die Funktionsweise des Umstellventils wird nachstehend näher erläutert, wobei die drei Ventileinheiten 8, 9, 10 aufgrund ihres identischen Aufbaus gleichartig arbeiten, so dass es insoweit genügt, beispielhaft auf die Funktionsweise z.B. der ersten Ventileinheit 8 einzugehen. In Fig. 2 ist für diese Erläuterung der Funktionsweise das Ventil in einer aktiven Betriebssituation mit der zugehörigen, durch Strömungspfeile repräsentierten Fluidströmung gezeigt.

Der jeweilige Ventilschließkörper 16, 17, 18 liegt in seiner Schließstellung S auf einem zugeordneten Ventilsitz 35 auf, wie den Figuren 4 und 5 für den ersten Ventilschließkörper 16 der ersten Ventileinheit 8 gezeigt, wodurch der Ventilschließkörper 16, 17, 18 die zugeordnete Fluidverbindung 12, 13, 14 und damit den Einlassbereich 2 gegenüber dem zugeordneten Auslass 4, 5, 6 abdichtet bzw. absperrt. In der Offenstellung O der jeweiligen Ventileinheit 8, 9, 10 ist der zugehörige Ventilschließkörper 16, 17, 18 von seinem Ventilsitz 35 beabstandet bzw. abgehoben. Die Ventilsitze 35 können z.B. wie gezeigt von Stirnenden eines jeweiligen Rohrstutzens gebildet sein, gegen die sich eine Stirnfläche des jeweiligen kolbenförmigen Ventilschließkörpers 16, 17, 18 abdichtend anlegen kann, wozu die Ventilschließkörper 16, 17, 18 in den gezeigten Beispielen einen T-förmig verbreiterten Kopfbereich aufweisen. Die Ventilsitze 35 können z.B. wie in den gezeigten Ventilausführungen in einer gleichen Querebene des Ventilgehäuses 1 liegen.

In den gezeigten Beispielen hebt sich im Betrieb der jeweilige Ventilschließkörper 16, 17, 18 durch den Differenzdruck des vom Einlassbereich 2 aus auf ihn wirkenden Fluiddrucks abzüglich des demgegenüber kleineren, auf ihn von der Gegendruckkammer 7 aus wirkenden Fluiddrucks und abzüglich der ggf. auf ihn in Schließrichtung S wirkenden Gewichtskraft von seinem Ventilsitz 35 ab. Dadurch ist dann die jeweilige Fluidverbindung 12, 13, 14 vom Einlassbereich 2 zum zugehörigen Auslass geöffnet und Fluid kann entsprechend direkt vom Einlassbereich 2 zu diesem Auslass strömen, wie in Fig. 2 für den ersten Auslass 4 ersichtlich und durch Strömungspfeile Fh symbolisiert. Zusätzlich besteht in den gezeigten Beispielen auch eine indirekte Fluidverbindung vom Einlassbereich 2 über den Einlassverbindungskanal 15, die Gegendruckkammer 7 und den zugeordneten Auslassverbindungskanal 19, 20, 21, wie in Fig. 2 für die erste Ventileinheit 8 veranschaulicht, jedoch erfolgt über diese indirekte Fluidverbindung aufgrund der gegebenen Fluiddruckverhältnisse ein in der Regel allenfalls geringer zusätzlicher Fluidstrom, in Fig. 2 mit Strömungspfeilen Fz angedeutet.

Ohne Beschränkung der Allgemeinheit sei die Betriebssituation gemäß Fig. 2 als eine erste Betriebsposition des Fluidumstellventils und die dort ebenso wie in den Fig. 3 bis 6 gezeigte Position des Umstellkörpers 11 als dessen erste Betriebsposition angenommen.

In dieser ersten Betriebsposition gibt der Umstellkörper 11 den ersten Ventilschließkörper 16 frei, so dass letzterer seine Offenstellung O einnimmt, wodurch die erste Fluidverbindung 12 geöffnet ist und das Fluid vom Einlass 3 bzw. Einlassbereich 2 sowohl direkt als auch indirekt über den Einlassverbindungskanal 15, die Gegendruckkammer 7 und den ersten Auslassverbindungskanal 19 zum ersten Auslass 4 strömt. Gleichzeitig hält der Umstellkörper 11, insbesondere die Umstellscheibe 24, den zweiten Ventilschließkörper 17 und den dritten Ventilschließkörper 18 jeweils in der Schließstellung S. Dabei verschließt der Umstellkörper 11 bzw. die Umstellscheibe 24 auch den jeweiligen zweiten bzw. dritten Auslassverbindungskanal 20, 21. Dies bedeutet, dass sowohl die zweite Fluidverbindung 13 als auch die dritte Fluidverbindung 14 ebenso wie die beiden zugehörigen indirekten Fluidverbindungen über den Einlassverbindungskanal 15, die Gegendruckkammer 7 und den zweiten bzw. dritten Auslassverbindungskanal 20, 21 abgesperrt sind. Weder aus dem Einlassbereich 2 noch aus der Gegendruckkammer 7 gelangt Fluid in den entsprechenden, zweiten bzw. dritten Auslass 5, 6.

Wenn der Benutzer die Drückbetätigungseinheit 33 des Umstellkörpers 11 betätigt und damit den Druckstift 32 axial in den Fig. 2 bis 5 nach oben bewegt, wird der Umstellkörper 11 bzw. die Umstellscheibe 24 axial angehoben, und die beiden von ihm bislang niedergedrückten Ventilschließkörper 17, 18 folgen dieser axialen Anhebebewegung aufgrund ihrer Fluiddruckvorspannung in Richtung Offenstellung O, d.h. aufgrund des auf sie wirkenden Differenzdrucks des Fluids vom Einlassbereich 2 bzw. von der Einlasskammer 29 einerseits und von der Gegendruckkammer 7 andererseits. Dadurch öffnen sich für den Umschaltmoment auch die beiden bislang abgesperrten Fluidverbindungen 13, 14. Dies kann zu einer Fluiddruckentlastung der Gegendruckkammer 7 und in Folge davon dazu beitragen, die vom Benutzer aufzuwendende Betätigungskraft für die Ventilumschaltung relativ gering zu halten. Über den Auslassverbindungskanal 19 des in seiner Offenstellung O befindlichen, nicht niedergedrückten Ventilschließkörpers 16 kann Fluid aus der Gegendruckkammer 7 abströmen, was den Fluiddruck in der Gegendruckkammer 7 niedrig hält und somit ebenfalls das axiale Anheben des Umstellkörpers 11 und vor allem auch der bislang niedergedrückten Ventilschließkörper 17, 18 erleichtert. Falls der Umstellkörper 11 in seiner Ausgangsstellung axial abgedichtet gegen den Gehäusekörper 36 anliegt, wirkt der Fluiddruck in der Gegendruckkammer 7 der Anhebebewegung des Umstellkörpers 11 anfänglich entgegen. Diese Druckwirkung lässt jedoch sofort nach, sobald der Umstellkörper 11 geringfügig angehoben wurde, da dann der Fluiddruck auch von der anderen Seite her auf den Umstellkörper 11 in Anheberichtung wirken kann.

Wenn die bislang niedergedrückten Ventilschließkörper 17, 18 ihre z.B. durch den Anschlag 27 und/oder die Haltemembran 26 definierte axiale Endstellung, d.h. ihre vollständige Offenstellung O, erreicht haben, führt das weitere axiale Anheben des Umstellkörpers 11 dazu, dass sich nun auch die Auslassverbindungskanäle 20, 21 der beiden bislang niedergehaltenen Ventilschließkörper 17, 18 öffnen, wodurch Fluid noch leichter bzw. schneller aus der Gegendruckkammer 7 abströmen kann.

Sobald dann der Umstellkörper 11 bis zu seiner axialen Endstellung angehoben wurde und der Benutzer den Druckstift 32 bzw. die Druckbetätigungseinheit 33 wieder losgelassen hat, senkt sich der Umstellkörper 11 wieder ab, unterstützt durch die Umstellfeder 28 und je nach Lageorientierung des Ventils auch durch die Gewichtskraft des Umstellkörpers 11. Zunächst senkt sich der Umstellkörper 11 allein ab, bis er die axiale Endstellung der Ventilschließkörper 16, 17, 18 erreicht hat.

Die erwähnte Drehmechanik, z.B. Kulissenmechanik, der Weiterschalteinrichtung 22 sorgt dafür, dass sich der Umstellkörper 11 im Verlauf seiner axialen Anhebebewegung und/oder in seiner axialen Endstellung und/oder während seiner anfänglichen Absenkbewegung bis auf Höhe der Ventilschließkörper 16, 17, 18 wie gewünscht um 120° dreht, z.B. im Uhrzeigersinn, wodurch er nun gegen den ersten Ventilschließkörper 16 und den dritten Ventilschließkörper 18 zur Anlage kommt und in seiner weiteren Absenkbewegung diese beiden Ventilschließkörper 16, 18 mitnimmt und sie dadurch in deren Schließstellung S bewegt und dort festhält. Der zweite Ventilschließkörper 17 wird nicht mehr durch den Umstellkörper 11 beaufschlagt und verbleibt in der Offenstellung O. Der Umstellkörper 11 befindet sich nun in seiner zweiten Betriebsposition, in der er folglich bewirkt, dass die erste Fluidverbindung 12 und die dritte Fluidverbindung 14 von den betreffenden Ventileinheiten 8, 10 abgesperrt werden, wohingegen die zweite Fluidverbindung 13 von der zweiten Ventileinheit 9 offen gehalten wird. Demnach strömt das Fluid dann vom Einlass 3 bzw. vom Einlassbereich 2 über die zweite Fluidverbindung 13 und den zweiten Auslassverbindungskanal 20 zum Auslass 5 und aus diesem ab.

Die nächste und alle weiteren Umschaltungen des Ventils erfolgen analog wie die soeben erläuterte Umschaltung, wobei sich der Umstellkörper dank der zyklischen Weiterschalteinrichtung 22 immer in die gleiche Richtung um jeweils 120° dreht. Dadurch gibt der Umstellkörper nach der nächsten Umschaltung in seine dritte Betriebsposition den dritten Ventilschließkörper 18 in seine Offenstellung O frei und hält den ersten und den zweiten Ventilschließkörper 16, 17 niedergedrückt in ihrer Schließstellung S. Mit der darauffolgenden Umschaltung erreicht der Umstellkörper 11 dann in den gezeigten Beispielen wieder seine erste Betriebsposition, d.h. das Ventil befindet sich dann wieder in der angenommenen Ausgangsstellung.

Wie die gezeigten und die weiteren oben erwähnten Ausführungsbeispiele deutlich machen, stellt die Erfindung ein Fluidumstellventil zur Verfügung, das gegenüber herkömmlichen Fluidumstellventilen Vorteile insbesondere hinsichtlich Funktionsweise, Aufbau und/oder Betriebszuverlässigkeit bietet. Insbesondere ermöglicht das erfindungsgemäße Fluidumstellventil ein komfortables Umschalten durch den Benutzer mit geringen, von ihm aufzuwendenden Umstellkräften und mit geringen Umstellwegen der Ventilkomponenten. Das Ventil ist wenig aufgrund seines Aufbaus und seiner Wirkungsweise störungsanfällig, und es lässt sich bei Bedarf sehr kompakt bauen.

Es versteht sich, dass das Fluidumstellventil nicht nur für sanitäre Anwendungen, z.B. in sanitären Dusch- oder Küchenbrausen, sondern auch für nicht-sanitäre Brauseanwendungen, z.B. in der chemischen Prozesstechnik und in der erdölverarbeitenden Industrie, geeignet ist, um die Führung bzw. Verteilung eines flüssigen oder gasförmigen Fluides entsprechend zu steuern.

## Patentansprüche

1. Fluidumstellventil, insbesondere sanitäres Fluidumstellventil, mit
- einem Ventilgehäuse (1),
- einem Einlassbereich (2) mit einem Einlass (3) in das Ventilgehäuse,
- einem ersten und einem zweiten Auslass (4,5) aus dem Ventilgehäuse,
- einer ersten Fluidverbindung (12) vom Einlassbereich (2) zu dem ersten Auslass (4) und einer zweiten Fluidverbindung (13) vom Einlassbereich (2) zu dem zweiten Auslass (5),
- einer Gegendruckkammer (7), die über einen Einlassverbindungskanal (15) mit dem Einlassbereich (2) fluidverbunden ist,
- einer ersten Ventileinheit (8), die einen ersten Ventilschließkörper (16) aufweist, der zwischen einer Schließstellung (S) und einer Offenstellung (O) für die erste Fluidverbindung (12) beweglich und einerseits über den Einlassbereich (2) und andererseits über die Gegendruckkammer (7) fluiddruckbeaufschlagbar angeordnet ist,
- einer zweiten Ventileinheit (9), die einen zweiten Ventilschließkörper (17) aufweist, der zwischen einer Schließstellung (S) und einer Offenstellung (O) für die zweite Fluidverbindung (13) beweglich und einerseits über den Einlassbereich (2) und andererseits über die Gegendruckkammer (7) fluiddruckbeaufschlagbar angeordnet ist, und
- einem nutzerbetätigbaren Umstellkörper (11) zur Umstellung der Ventilschließkörper (16, 17) zwischen ihrer Schließstellung (S) und ihrer Offenstellung (O), wobei der Umstellkörper (11) durch eine Umschaltbewegung zwischen verschiedenen Betriebspositionen umschaltbar ist,
**dadurch gekennzeichnet, dass**
- die Gegendruckkammer (7) über einen ersten absperrbaren Auslassverbindungskanal (19) mit dem ersten Auslass (4) und über einen zweiten absperrbaren Auslassverbindungskanal (20) mit dem zweiten Auslass (5) fluidverbunden ist und
- der Umstellkörper (11) in einer ersten Betriebsposition den ersten Ventilschließkörper (16) freigibt und den zweiten Ventilschließkörper (17) durch mechanischen Kontakt in seiner Schließstellung (S) hält und in einer zweiten Betriebsposition den ersten Ventilschließkörper durch mechanischen Kontakt in seiner Schließstellung hält und den zweiten Ventilschließkörper freigibt.

2. Fluidumstellventil nach Anspruch 1, weiter **dadurch gekennzeichnet, dass** die Umschaltbewegung des Umstellkörpers (11) eine Axialbewegung und eine Drehbewegung umfasst.

3. Fluidumstellventil nach Anspruch 1 oder 2, weiter **dadurch gekennzeichnet, dass** der Umstellkörper (11) durch eine Weiterschalteinrichtung (22) zyklisch von einer zu einer nächsten der verschiedenen Betriebspositionen weiterschaltbar ist.

4. Fluidumstellventil nach einem der vorhergehenden Ansprüche, weiter **dadurch gekennzeichnet, dass** der Umstellkörper (11) in der ersten Betriebsposition den zweiten Auslassverbindungskanal (20) absperrt und/oder in der zweiten Betriebsposition den ersten Auslassverbindungskanal (19) absperrt.

5. Fluidumstellventil nach einem der vorhergehenden Ansprüche, weiter **dadurch gekennzeichnet, dass** die verschiedenen Betriebspositionen verschiedenen Drehwinkelstellungen des Umstellkörpers (11) entsprechen.

6. Fluidumstellventil nach einem der vorhergehenden Ansprüche, weiter **dadurch gekennzeichnet, dass** die Gegendruckkammer (7) einteilig ausgebildet ist.

7. Fluidumstellventil nach Anspruch 6, weiter **dadurch gekennzeichnet, dass** der Umstellkörper (11) ein in der Gegendruckkammer (7) beweglich angeordnetes Umstellglied (23) aufweist, das auf den ersten und auf den zweiten Ventilschließkörper (16,17) wirkt.

8. Fluidumstellventil nach Anspruch 7, weiter **dadurch gekennzeichnet, dass** das Umstellglied (23) eine in der Gegendruckkammer (7) axial- und drehbewegliche Umstellscheibe (24) beinhaltet, die in den verschiedenen Betriebspositionen unterschiedliche Drehstellungen einnimmt und axial auf die Ventilschließkörper (16, 17) wirkt.

9. Fluidumstellventil nach einem der vorhergehenden Ansprüche, weiter **dadurch gekennzeichnet, dass** der erste Auslassverbindungskanal (19) in den ersten Ventilschließkörper (16) eingebracht ist und/oder der zweite Auslassverbindungskanal (20) in den zweiten Ventilschließkörper (17) eingebracht ist.

10. Fluidumstellventil nach einem der vorhergehenden Ansprüche, weiter **dadurch gekennzeichnet, dass** der erste und/oder der zweite Ventilschließkörper (16, 17) in einer Aufnahme (25) axialbeweglich geführt oder von einer Haltemembran (26) axialbeweglich gehalten ist.

11. Fluidumstellventil nach einem der vorhergehenden Ansprüche, weiter **dadurch gekennzeichnet, dass** der erste und/oder der zweite Ventilschließkörper (16, 17) in seiner Offenstellung (O) axial durch einen Anschlag (27) begrenzt ist.

12. Fluidumstellventil nach einem der vorhergehenden Ansprüche, weiter **dadurch gekennzeichnet, dass** der erste und/oder der zweite Ventilschließkörper (16, 17) in Richtung seiner Schließstellung (S) federkraftbeaufschlagt und/oder gewichtskraftbeaufschlagt ist.

13. Fluidumstellventil nach einem der vorhergehenden Ansprüche, weiter **dadurch gekennzeichnet, dass** der Einlassbereich (2) eine einteilige Einlasskammer (29) umfasst, über welche die Ventilschließkörper (16, 17) fluiddruckbeaufschlagbar sind.

14. Fluidumstellventil nach einem der vorhergehenden Ansprüche, weiter **dadurch gekennzeichnet, dass** der erste Ventilschließkörper (16) dem Einlassbereich (2) mit einer einlassseitigen Druckkontaktfläche (30) und der Gegendruckkammer (7) mit einer gegendruckseitigen Druckkontaktfläche (31) zugewandt ist, die kleiner als die einlassseitige Druckkontaktfläche (30) ist.

15. Fluidumstellventil nach einem der vorhergehenden Ansprüche, weiter **dadurch gekennzeichnet, dass** der zweite Ventilschließkörper (17) dem Einlassbereich (2) mit einer einlassseitigen Druckkontaktfläche (30) und der Gegendruckkammer (7) mit einer gegendruckseitigen Druckkontaktfläche (31) zugewandt ist, die kleiner als die einlassseitige Druckkontaktfläche (30) ist.

## Claims

1. Fluid switching valve, preferably sanitary switching valve, comprising
- a valve housing (1),
- an inlet area (2) having an inlet (3) into the valve housing,
- a first and a second outlet (4, 5) out of the valve housing,
- a first fluid connection (12) from the inlet area (2) to the first outlet (4) and a second fluid connection (13) from the inlet area (2) to the second outlet (5),
- a counter pressure chamber (7), which is fluid-connected through an inlet link duct (15) to the inlet area (2),
- a first valve unit (8) comprising a first valve closure body (16) which is movable between a closed position (S) and an open position (O) for the first fluid connection (12), and is arranged so as to be subjectable to fluid pressure on the one hand via the inlet area (2) and on the other hand via the counter pressure chamber (7),
- a second valve unit (9) comprising a second valve closure body (17) which is movable between a closed position (S) and an open position (O) for the second fluid connection (13), and is arranged so as to be subjectable to fluid pressure on the one hand via the inlet area (2) and on the other hand via the counter pressure chamber (7), and
- a user-operable switching body (11) for switching the valve closure bodies (16, 17) between their closed position (S) and their open position (0), the switching body (11) being switchable between different operating positions by a switching movement,
**characterized in that**
- the counter pressure chamber (7) is fluid-connected through a first blockable outlet link duct (19) to the first outlet (4), and through a second blockable outlet link duct (20) to the second outlet (5) and
- the switching body (11) in a first operating position releases the first valve closure body (16) and by mechanical contact holds the second valve closure body (17) in its closed position (S), and in a second operating position by mechanical contact holds the first valve closure body in its closed position and releases the second valve closure body.

2. Fluid switching valve according to claim 1, further **characterized in that** the switching movement of the switching body (11) includes an axial motion and a rotary motion.

3. Fluid switching valve according to claim 1 or 2, further **characterized in that** the switching body (11) is cyclically switchable by a forward switching arrangement (22) from any of the different operating positions to a next one.

4. Fluid switching valve according to any one of the preceding claims, further **characterized in that** the switching body (11) in the first operating position blocks the second outlet link duct (20) and/or in the second operating position blocks the first outlet link duct (19).

5. Fluid switching valve according to any one of the preceding claims, further **characterized in that** the different operating positions correspond to different rotation angle positions of the switching body (11).

6. Fluid switching valve according to any one of the preceding claims, further **characterized in that** the counter pressure chamber (7) is formed as a single piece.

7. Fluid switching valve according to claim 6, further **characterized in that** the switching body (11) comprises a switching member (23) which is positioned movably in the counter pressure chamber (7) and acts on the first and on the second valve closure bodies (16,17).

8. Fluid switching valve according to claim 7, further **characterized in that** the switching member (23) comprises a switching disk (24) which is axially and rotationally movable in the counter pressure chamber (7) and assumes different rotational positions in the different operating positions and acts axially on the valve closure bodies (16, 17).

9. Fluid switching valve according to any one of the preceding claims, further **characterized in that** the first outlet link duct (19) is provided in the first valve closure body (16), and/or the second outlet link duct (20) is provided in the second valve closure body (17).

10. Fluid switching valve according to any one of the preceding claims, further **characterized in that** the first and/or the second valve closure body (16, 17) is guided axially movably in a receptacle (25), or is held axially movably by a holding membrane (26).

11. Fluid switching valve according to any one of the preceding claims, further **characterized in that** the first and/or the second valve closure body (16, 17) is bounded axially in its open position (O) by a stop (27).

12. Fluid switching valve according to any one of the preceding claims, further **characterized in that** the first and/or the second valve closure body (16, 17) is subjected to a spring force and/or weight force in the direction of its closed position (S).

13. Fluid switching valve according to any one of the preceding claims, further **characterized in that** the inlet area (2) includes a one-piece inlet chamber (29), through which the valve closure bodies (16, 17) are fluid-pressurizable.

14. Fluid switching valve according to any one of the preceding claims, further **characterized in that** the first valve closure body (16) faces the inlet area (2) with a pressure contact surface (30) on an inlet side, and faces the counter pressure chamber (7) with a pressure contact surface (31) on a counter pressure side, which pressure contact surface (31) on a counter pressure side is smaller than the pressure contact surface (30) on the inlet side.

15. Fluid switching valve according to any one of the preceding claims, further **characterized in that** the second valve closure body (17) faces the inlet area (2) with a pressure contact surface (30) on an inlet side, and faces the counter pressure chamber (7) with a pressure contact surface (31) on a counter pressure side, which pressure contact surface (31) on a counter pressure side is smaller than the pressure contact surface (30) on the inlet side.

## Revendications

1. Soupape de réglage de fluide, notamment soupape de réglage de fluide pour sanitaires, avec
- un corps de soupape (1),
- une zone d'entrée (2) avec une entrée (3) dans le corps de soupape,
- une première et une seconde sortie (4, 5) hors du corps de soupape,
- une première liaison fluidique (12) de la zone d'entrée (2) à la première sortie (4) et une seconde liaison fluidique (13) de la zone d'entrée (2) à la seconde sortie (5),
- une chambre de contrepression (7), qui est reliée fluidiquement à la zone d'entrée (2) par le biais d'un canal de raccordement à l'entrée (15),
- une première unité de soupape (8) qui présente un premier corps obturateur de soupape (16) qui est disposé de manière mobile entre une position de fermeture (S) et une position d'ouverture (O) pour la première liaison fluidique (12) et qui est disposé de manière à pouvoir être soumis à une pression fluidique d'un côté via la zone d'entrée (2) et de l'autre côté via la chambre de contrepression (7).
- une seconde unité de soupape (9) qui présente un second corps obturateur de soupape (17) qui est disposé de manière mobile entre une position de fermeture (S) et une position d'ouverture (O) pour la seconde liaison fluidique (13) et qui est disposé de manière à pouvoir être soumis à une pression fluidique d'un côté via la zone d'entrée (2) et de l'autre côté via la chambre de contrepression (7), et
- un corps inverseur (11) actionnable par l'utilisateur pour inverser les corps obturateurs de soupape (16, 17) entre leur position de fermeture (S) et leur position d'ouverture (O), sachant que le corps inverseur (11) est commutable entre différentes positions de fonctionnement par un mouvement de commutation, **caractérisé en ce que**
- la chambre de contrepression (7) est reliée fluidiquement à la première sortie (4) par un premier canal de raccordement à la sortie (19) sectionnable et à la seconde sortie (5) par un second canal de raccordement à la sortie (20) sectionnable et
- dans une première position de fonctionnement, le corps inverseur (11) libère le premier corps obturateur de soupape (16) et maintient le second corps obturateur de soupape (17) dans sa position fermée (S) par contact mécanique et, dans une seconde position de fonctionnement, maintient le premier corps obturateur de soupape dans sa position fermée par contact mécanique et libère le second corps obturateur de soupape.

2. Soupape de réglage de fluide selon la revendication 1, caractérisé également en ce que le mouvement de commutation du corps inverseur (11) comprend un mouvement axial et un mouvement de rotation.

3. Soupape de réglage de fluide selon la revendication 1 ou 2, caractérisé également en ce que le corps inverseur (11) est commutable cycliquement d'une position de fonctionnement vers la suivante parmi les différentes positions de fonctionnement par un dispositif de poursuite de commutation (22).

4. Soupape de réglage de fluide selon l'une des revendications précédentes, caractérisé également en ce que, dans la première position de fonctionnement, le corps inverseur (11) obture le second canal de raccordement à la sortie (20) et/ou obture, dans la seconde position de fonctionnement, le premier canal de raccordement à la sortie (19).

5. Soupape de réglage de fluide selon l'une des revendications précédentes, caractérisé également en ce que les différentes positions de fonctionnement correspondent à différentes positions d'angle de rotation du corps inverseur (11).

6. Soupape de réglage de fluide selon l'une des revendications précédentes, caractérisé également en ce que la chambre de contrepression (7) est constituée d'un seul élément.

7. Soupape de réglage de fluide selon la revendication 6, caractérisé également en ce que le corps inverseur (11) présente un élément inverseur (23) disposé de manière mobile dans la chambre de contrepression (7), qui agit sur le premier et sur le second corps obturateur de soupape (16, 17).

8. Soupape de réglage de fluide selon la revendication 7, caractérisé également en ce que l'élément inverseur (23) contient un disque d'inversion (24) mobile axialement et en rotation dans la chambre de contrepression (7), qui adopte différentes positions de rotation dans les différentes positions de fonctionnement et qui agit axialement sur le corps obturateur de soupape (16, 17).

9. Soupape de réglage de fluide selon l'une des revendications précédentes, caractérisé également en ce que le premier canal de raccordement à la sortie (19) est logé dans le premier corps obturateur de soupape (16) et/ou que le second canal de raccordement à la sortie (20) est logé dans le second corps obturateur de soupape (17).

10. Soupape de réglage de fluide selon l'une des revendications précédentes, caractérisé également en ce que le premier et/ou le second corps obturateur de soupape (16, 17) est conduit de manière axialement mobile dans un logement (25) ou est maintenu de manière axialement mobile par une membrane de retenue (26).

11. Soupape de réglage de fluide selon l'une des revendications précédentes, caractérisé également en ce que le premier et/ou le second corps obturateur de soupape (16, 17) est limité axialement dans sa position d'ouverture (O) par une butée (27).

12. Soupape de réglage de fluide selon l'une des revendications précédentes, caractérisé également en ce que le premier et/ou le second corps obturateur de soupape (16, 17) est sollicité par un ressort et/ou un poids en direction de sa position de fermeture (S).

13. Soupape de réglage de fluide selon l'une des revendications précédentes, caractérisé également en ce que la zone d'entrée (2) comprend une chambre d'entrée (29) en un seul élément par le biais de laquelle les corps obturateurs de soupape (16, 17) sont soumis à une pression fluidique.

14. Soupape de réglage de fluide selon l'une des revendications précédentes, caractérisé également en ce que le premier corps obturateur de soupape (16) est tourné vers la zone d'entrée (2) au niveau d'une surface de contact de pression côté entrée (30) et vers la chambre de contrepression (7) au niveau d'une surface de contact de pression côté contrepression (31), qui est plus petite que la surface de contact de pression côté entrée (30).

15. Soupape de réglage de fluide selon l'une des revendications précédentes, caractérisé également en ce que le second corps obturateur de soupape (17) est tourné vers la zone d'entrée (2) au niveau d'une surface de contact de pression côté entrée (30) et vers la chambre de contrepression (7) au niveau d'une surface de contact de pression côté contrepression (31), qui est plus petite que la surface de contact de pression côté entrée (30).
